# EUROPEAN PATENT APPLICATION

(11) **EP 1 757 492 A1**
(43) Date of publication of application: **28.02.2007**
(21) Application number: 06015579.3
(22) Date of filing: 26.07.2006
(51) Int. Cl.: B60R 21/207, B60N 2/427, B60R 21/217

(54) **Occupant restraining apparatus**

(30) Priority: 25.08.2005 JP 2005244540
(71) Applicant: TAKATA CORPORATION, Minato-ku, Tokyo 106-8510 (JP)
(72) Inventor: Yoshikawa, Hiromichi, Minato-ku Tokyo 106-8510 (JP)
(74) Representative: Vossius & Partner

(57) **Abstract**

An occupant restraining apparatus is provided which needs no dedicated members for mounting a gas generator on a seat-side member. The inflatable bag 12 is disposed under a seat cushion. A hose 12b extends from a gas inlet 12a of the bag 12. A duct 16 extending from a gas generator 14 is inserted into the hose 12b. The hose 12b is fastened to the duct 16 with a band 40. A stud bolt 42 serving as a mounting member for fixing the gas generator 14 to a seat pan 8, protrudes from the band 40 (FIG. 3).

## Description

The present invention relates to an occupant restraining apparatus configured to inflate a bag so as to press a seat cushion from beneath at the time of frontal collision of a vehicle and thereby to prevent an occupant's body from moving forward and downward, and more specifically, it relates to an occupant restraining apparatus in which a gas generator for inflating the bag is disposed outside the bag.

Even if an occupant wears a seat belt, at the time of frontal collision of the vehicle, the occupant can move forward, passing under the lap belt (so-called submarine phenomenon). In order to prevent this phenomenon, JP-A-2002-145002 (Patent Document 1) discloses an occupant restraining apparatus, as a system restraining an occupant of a vehicle at the time of a collision. In the occupant restraining apparatus, an inflatable bag is disposed between a seat cushion and a seat pan (called "supporting plate" in the document). At the time of a vehicle collision, this bag is inflated by a gas generator, thereby pressing up the front of the seat cushion.

At the time of a vehicle collision, the gas generator is activated and the air bag is inflated. The front of the seat pad is pressed up, or the density thereof is increased by being pressed from beneath. Thus, the forward movement of an occupant's body is prevented (or curbed).

According to the document, the gas generator is disposed outside the air bag, and is mounted on the seat pan (supporting plate).

In the above JP-A-2002-145002, the mounting structure of the gas generator on the seat pan is not described specifically.

It is an object of the present invention to provide an occupant restraining apparatus that needs no dedicated members for mounting a gas generator on a seat-side member.

The invention of Claim 1 has the following configuration. An occupant restraining apparatus includes a bag, a gas generator, and a connecting member. The bag is disposed under the front of a seat cushion and inflatable so as to press the front of the seat cushion from beneath. The gas generator inflates the bag in an emergency of a vehicle. The connecting member connects a gas inlet of the bag to the gas generator or a gas conveying member fixed to the gas generator. In addition, a mounting member for fixing the gas generator to a seat-side member is provided in the connecting member.

The invention of Claim 2 has the following configuration. In addition to the configuration of Claim 1, the connecting member is a band that fastens the gas inlet to the gas generator or the gas conveying member, and the mounting member is a bolt protruding from the band.

The invention of Claim 3 has the following configuration. An occupant restraining apparatus includes a bag, a gas generator, and a gas conveying member. The bag is disposed under the front of a seat cushion and inflatable so as to press the front of the seat cushion from beneath. The gas generator inflates the bag in an emergency of a vehicle. The gas conveying member is fixed to the gas generator, and a gas inlet of the bag is connected to the gas conveying member. In addition, a mounting member for fixing the gas generator to a seat-side member is provided in the gas conveying member.

The invention of Claim 4 has the following configuration. In addition to the configuration of Claim 3, the mounting member is a bolt protruding from the gas conveying member.

The invention of Claim 5 has the following configuration. In addition to the configuration of any one of Claims 1 to 4, the seat side member is a seat pan or a base frame.

In the occupant restraining apparatus of Claim 1, a mounting member for fixing a gas generator to a seat side member is provided in a connecting member that connects a gas inlet of a bag to the gas generator or a gas conveying member fixed to the gas generator. Therefore, no dedicated members for fixing the gas generator to the seat side member are needed, or the number of the dedicated members can be reduced. Thus, it is possible to simplify the configuration of the entire apparatus. In addition, it is possible to simplify the assembling work.

In Claim 2, the mounting member is a bolt protruding from a band that fastens the gas inlet of the bag to the gas generator or the gas conveying member. Therefore, the configuration of the entire apparatus can be simplified.

In the occupant restraining apparatus of Claim 3, a mounting member for fixing a gas generator to a seat side member is provided in a gas conveying member fixed to the gas generator. Therefore, no dedicated members for fixing the gas generator to the seat-side member are needed, or the number of the dedicated members can be reduced. Thus, it is possible to simplify the configuration of the entire apparatus. In addition, it is possible to simplify the assembling work.

In Claim 4, the mounting member is a bolt protruding from the gas conveying member fixed to the gas generator. Therefore, the configuration of the entire apparatus can be simplified.

As claimed in Claim 5, the seat side member is preferably a seat pan or a base frame.

The embodiments of the present invention will now be described with reference to the drawings.

FIG. 1 is a perspective view of a frame of a seat having an occupant restraining apparatus according to an embodiment;
FIG. 2 is an exploded perspective view of the connecting structure between a gas generator and a bag of the occupant restraining apparatus of FIG. 1;
FIG. 3 is a perspective view showing the gas generator and the bag of the occupant restraining apparatus of FIG. 1, which are connected to each other;
FIG. 4 is a sectional view showing the connecting structure between the gas generator and the bag of the occupant restraining apparatus of FIG. 1;
FIG. 5 is a sectional view taken along line V-V of FIG. 4;
FIG. 6 is an exploded view showing the mounting structure of the occupant restraining apparatus of FIG. 1 onto a seat pan;
FIG. 7 is a sectional view showing the connecting structure between a gas generator, a duct, and a bag according to another embodiment; and
FIG. 8 is an exploded perspective view of the gas generator and the duct of the occupant restraining apparatus of FIG. 7.

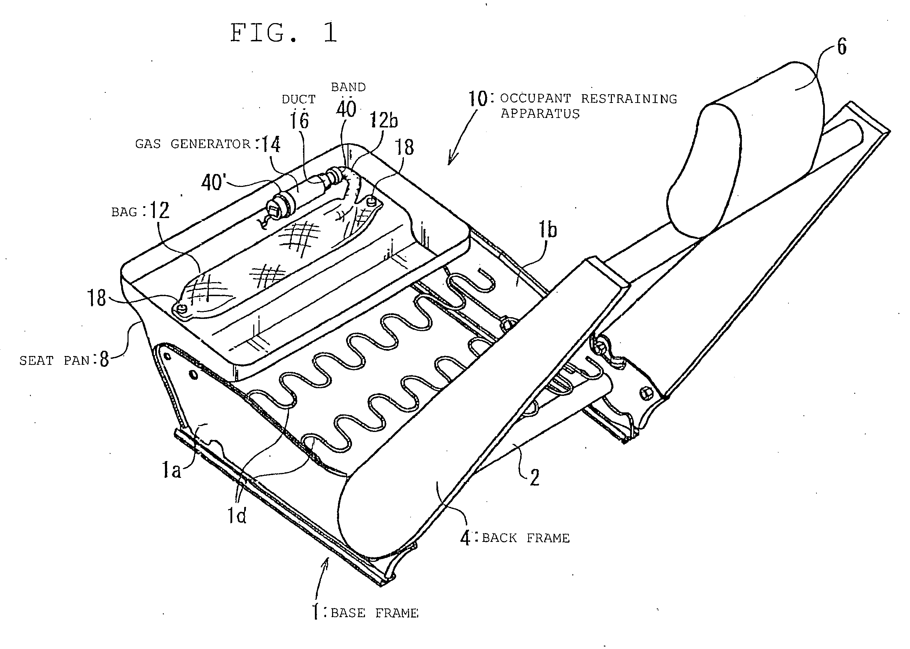

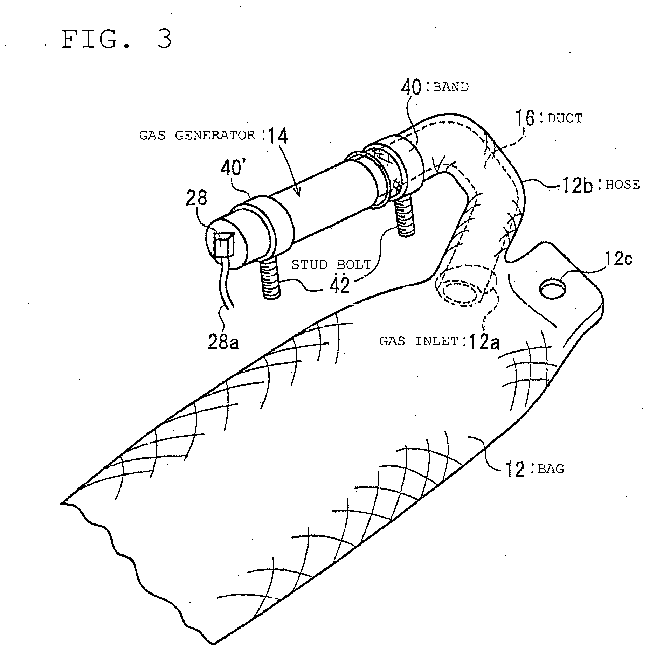

The first embodiment of Figs. 1 to 6 is described as follows.
A frame constituting a seat of an automobile includes a base frame 1 and a back frame 4 that is pivotably joined to the base frame 1 via a supporting shaft 2 and a reclining device (not shown). A headrest 6 is attached to the top of the back frame 4. The base frame 1 has left and right side frames 1a and 1b. A seat pan 8 is provided so as to hang between the fronts of the side frames 1a and 1b.

Although not shown, the base frame 1 and the back frame 4 are provided with a seat cushion and a seat back, respectively, formed of, for example, urethane. The seat pan 8 is disposed under the front of the seat cushion. Reference numeral 1d in FIG. 1 denotes springs supporting the seat cushion.

An occupant restraining apparatus 10 includes a bag 12, a gas generator 14, a duct (pipe) 16, a band 40, a stud bolt 42, and so on. The bag 12 is disposed on the seat pan 8 (under the front of the seat cushion) and is inflatable. The gas generator 14 is for inflating the bag 12. One end (the base end) of the duct 16 is fixed to the gas generator 14. The duct 16 serves as a gas conveying member for introducing the gas discharged from the gas generator 14 into the bag 12. The band 40 serves as a connecting member that connects the duct 16 to a gas inlet 12a of the bag 12 (to a hose 12b extending from the gas inlet 12a, in this embodiment). The stud bolt 42 protrudes from the band 40 and serves as a mounting member for fixing the gas generator 14 to the seat pan 8.

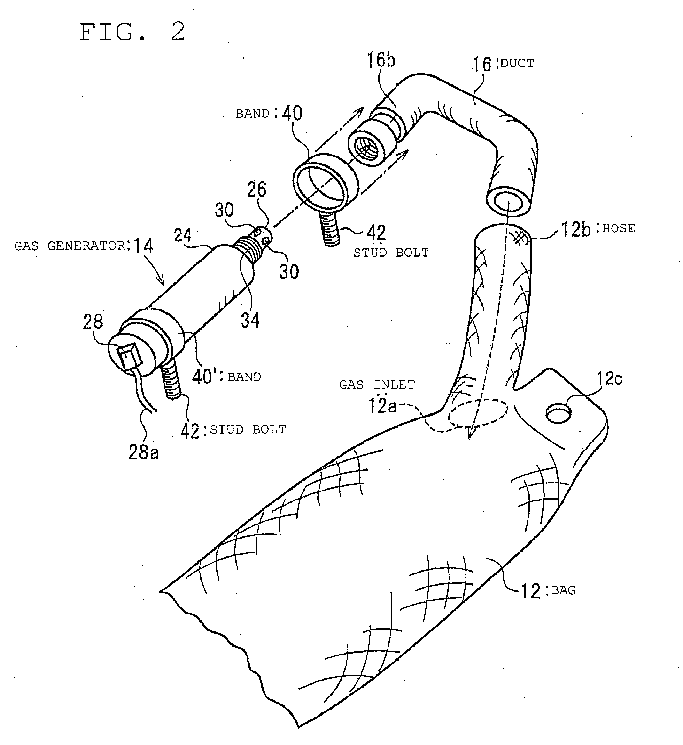

As shown in FIG. 2, the gas generator 14 includes a main body 24, a nozzle portion (gas discharging portion) 26, and an initiator (gas-generating-agent igniter) 28. The main body 24 is cylindrical and contains a gas generating agent. The nozzle portion 26 is tubular and protrudes from one end (the front end) of the main body 24. The initiator 28 is provided at the other end (the rear end) of the main body 24. Reference numeral 28a denotes a harness for providing electricity to the initiator 28.

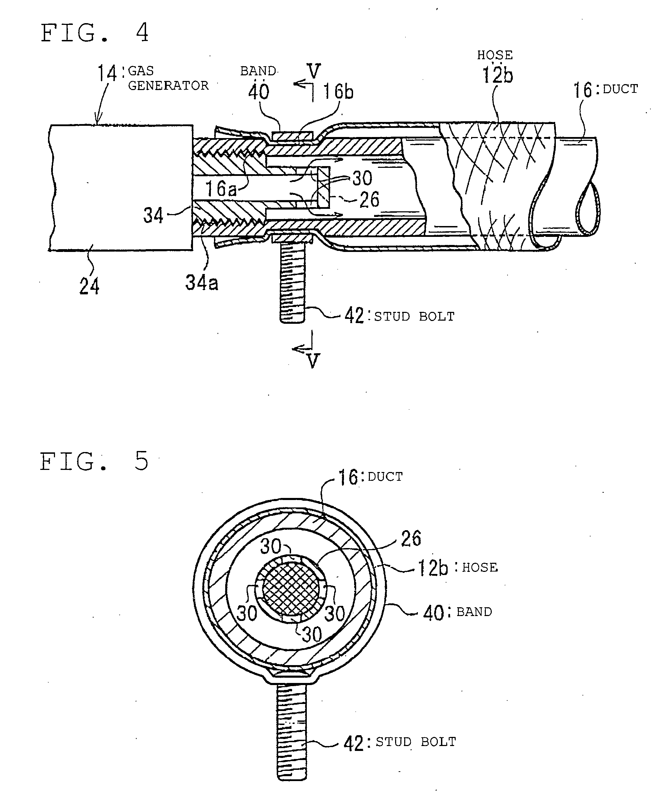

As shown in FIG. 4, the front end of the nozzle portion 26 is closed. A plurality of gas discharging ports 30 are provided in the side peripheral surface of the front of the nozzle portion 26, in the circumferential direction, at intervals. As shown, the diameter of the nozzle portion 26 is smaller than the inner diameter of the duct 16. A large diameter portion 34 is formed at the base end of the nozzle portion 26. The diameter of the large diameter portion 34 is approximately the same as the inner diameter of the duct 16. The outer peripheral surface of the large diameter portion 34 is provided with an external thread 34a. The inner peripheral surface of the base end of the duct 16 is provided with an internal thread 16a to be screwed onto the external thread 34a.

In this embodiment, the gas generator 14 and the duct 16 are joined together by inserting the nozzle portion 26 into the base end of the duct 16 and screwing the external thread 34a into the internal thread 16a.

As shown in FIG. 1, the gas generator 14 is disposed on the front upper surface of the seat pan 8 such that the axial direction is in the horizontal width direction of the seat pan 8 (the width direction of the vehicle). In addition, the duct 16 extends from the gas generator 14 along the front edge of the seat pan 8 toward the side edge of the seat pan 8. In the vicinity of the corner of the seat pan 8, the duct 16 curves backward so as to extend along the side edge of the seat pan 8. Next, in the vicinity of the area where the bag 12 is placed, the duct 16 curves toward the center of the seat pan 8 and is then connected to the gas inlet 12a of the bag 12.

The bag 12 extends in the horizontal width direction of the seat pan 8. Both the right and left ends of the bag 12 are fixed to the upper surface of the seat pan 8 with bolts 18. Reference numeral 12c in FIG. 2 denotes one of bolt holes provided at both the right and left ends of the bag 12. The bolts 18 are screwed into the seat pan 8 through the bolt holes 12c. The gas inlet 12a is provided at one end in the longitudinal direction of the bag 12.

As shown in FIG. 2, in this embodiment, a hose 12b for connecting to the duct 16 extends from the edge of the gas inlet 12a. The front end of the duct 16 is inserted into the hose 12b.

As shown, in this embodiment, the hose 12b has approximately the same length as the duct 16. The duct 16 is inserted up to the base of the hose 12b, and the front end of the duct 16 faces the gas inlet 12a. In addition, the hose 12b covers up to the base end of the duct 16. The end of the hose 12b is fastened to the base end of the duct 16 with the band 40. Reference numeral 16b in FIG. 2 denotes a groove for fitting the band 40, provided in the outer peripheral surface at the base end of the duct 16. The band 40 is fitted into the groove 16b.

In this embodiment, the band 40 is a ring formed of metal, such as iron. When the hose 12b is fastened to the duct 16 with the band 40, the duct 16 is inserted into the hose 12b, and then the band 40 is fitted onto the end of the hose 12b and deformed by caulking or drawing so that the diameter decreases. Thus, the hose 12b is attached firmly to the outer peripheral surface of the duct 16 (in the groove 16b), and the band 40 itself is fixed to the outer peripheral surface of the duct 16 (in the groove 16b) with the hose 12b between.

However, in the present invention, various types of bands can be used which are different from the above type of band that is deformed by caulking or drawing so as to fasten the hose to the duct. For example, a type of band whose diameter is decreased by tightening a screw so as to fasten the hose, and a type of band that is elastically deformed in the direction such that the diameter thereof decreases so as to fasten the hose, can be used.

The stud bolt 42 protrudes downward from the outer peripheral surface of the band 40.

In this embodiment, another band 40' having a stud bolt 42 is attached to the outer peripheral surface at the rear end of the gas generator 14. The band 40' having a stud bolt 42 is a dedicated member for fixing the gas generator 14 to the seat pan 8. The configuration of the band 40' having a stud bolt 42 is substantially the same as that of the above-described band 40 having a stud bolt 42 that fastens the hose 12b to the duct 16.

In this embodiment, the stud bolts 42, 42 of the bands 40 and 40' serve as mounting members for fixing the gas generator 14 to the seat pan 8.

The method for installing the occupant restraining apparatus configured as above onto the seat pan 8 is as follows.

First, in advance, the duct 16 is joined to the front end of the gas generator 14, the duct 16 is inserted into the hose 12b of the bag 12, and the hose 12b is fastened to the duct 16 with the band 40. In addition, the band 40' is attached to the rear end of the gas generator 14.

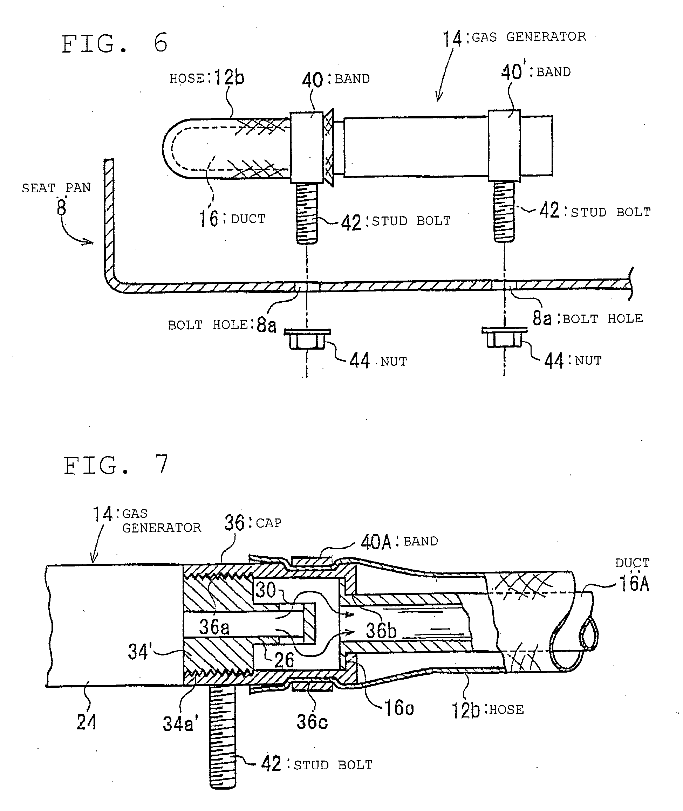

Next, the combination of the bag 12, the duct 16, and the gas generator 14 is disposed on the seat pan 8. At this time, as shown in FIG. 6, the stud bolts 42, 42 of the bands 40, 40' are passed through the bolt holes 8a, 8a of the seat pan 8, and nuts 44, 44 are tightened on the stud bolts 42, 42 from the underside of the seat pan 8. Thus, the bands 40, 40' are fixed to the seat pan 8, and the duct 16 (and the hose 12b) and the gas generator 14 are fixed to the seat pan 8. In addition, both ends of the bag 12 are fixed to the seat pan 8 with bolts 18. Thus, installation of the occupant restraining apparatus 10 onto the seat pan 8 is completed.

In this occupant restraining apparatus 10, one of the stud bolts 42 for fixing the gas generator 14 to the seat pan 8 is provided in the band 40 for connecting the hose 12b of the bag 12 to the duct 16. Therefore, only one dedicated member for fixing the gas generator 14 to the seat pan 8 (the band 40' having a stud bolt 42) is sufficient. Thus, it is possible to simplify the configuration of the entire apparatus. In addition, it is possible to simplify the assembling work.

The occupant restraining apparatus 10 operates as follows.

If a vehicle having the occupant restraining apparatus 10 configured as above encounters an emergency such as a collision, the gas generator 14 is activated. Gas is discharged from the gas generator 14 into the duct 16 through the gas discharging ports 30 as shown by arrows in FIG. 4, and is introduced into the bag 12 through the duct 16. Thus, the bag 12 is inflated. The seat cushion is pressed up by the inflated bag 12, or the density of the seat cushion increases (that is to say, the seat cushion is harden) by being pressed up from beneath. Thus, the lumbar region of the seated occupant is prevented from moving forward.

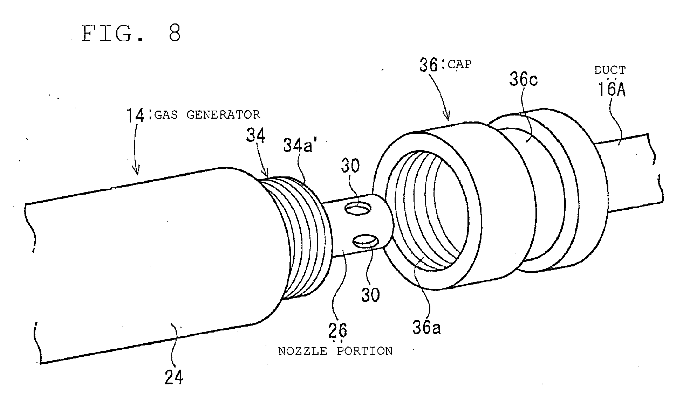

FIG. 7 is a sectional view showing the connecting structure between a gas generator, a duct, and a bag according to another embodiment. FIG. 8 is an exploded perspective view of the gas generator and the duct.

In this embodiment, a cap 36 is provided at the base end of a duct 16A serving as a gas conveying member. The cap 36 is attached to the front end (a nozzle portion 26) of a gas generator 14. The cap 36 is provided with a stud bolt 42 serving as a mounting member that fixes the gas generator 14 to a seat pan 8 (not shown in FIGS. 7 and 8).

Also in this embodiment, a large diameter portion 34' is formed at the base end of the nozzle portion 26. The diameter of the large diameter portion 34' is approximately the same as the inner diameter of the opening at the rear end of the cap 36. The side peripheral surface of the large diameter portion 34' is provided with an external thread 34a'. The inner peripheral surface of the opening at the rear end of the cap 36 is provided with an internal thread 36a to be screwed onto the external thread 34a'. The cap 36 is fixed to the front end of the gas generator 14 by inserting the nozzle portion 26 into the cap 36 and screwing the external thread 34a' into the internal thread 36a.

The front surface of the cap 36 is provided with an opening 36b. The base end of the duct 16A is inserted into the opening 36b. A flange 16c is provided around the periphery of the base end of the duct 16A. The flange 16c is placed on the periphery of the opening 36b inside the cap 36, and is fixed by, for example, welding.

In this embodiment, the duct 16A is inserted into a hose 12b of a bag 12 (not shown in FIGS. 7 and 8) so that the end of the hose 12b covers the outer peripheral surface of the cap 36, and then the hose 12b is fastened to the cap 36 with the band 40A. The band 40A has no stud bolt 42 unlike the band 40 of FIGS. 1 to 3, but otherwise the band 40A is the same as the band 40. A groove 36c for fitting the band 40A is provided in the outer peripheral surface of the cap 36. The band 40A is fitted into the groove 36c.

Although not shown, also in this embodiment, another band 40' having a stud bolt 42 is attached to the outer peripheral surface at the rear end of the gas generator 14. The stud bolt 42 of the cap 36 and the stud bolt 42 of this band 40' serve as mounting members for fixing the gas generator 14 to the seat pan 8.

Otherwise, this embodiment is the same as the embodiment of FIGS. 1 to 6. In FIGS. 7 and 8, the same reference numerals designate the same components as those in the embodiment of FIGS. 1 to 6. In addition, the method for installing the occupant restraining apparatus of this embodiment onto the seat pan 8 is the same as the first embodiment.

Also in this embodiment, one of the stud bolts 42 for fixing the gas generator 14 to the seat pan 8 is provided in the cap 36 provided at the base end of the duct 16A. Therefore, only one dedicated member for fixing the gas generator 14 to the seat pan 8 (the band 40' having a stud bolt 42) is sufficient. Thus, it is possible to simplify the configuration of the entire apparatus. In addition, it is possible to simplify the assembling work.

In this embodiment, if a vehicle encounters an emergency such as a collision and the gas generator 14 is activated, gas is discharged from the gas generator 14 into the cap 36 through the gas discharging ports 30 as shown by arrows in FIG. 7, and then flows into the duct 16A via the cap 36. Next, the gas is introduced into the bag 12 through the duct 16A. Thus, the bag 12 is inflated.

The above-described embodiments are merely examples of the present invention, and the present invention is not limited to the above-described embodiments.

For example, the connecting structure between a duct (pipe) serving as a gas conveying member and a gas generator is not limited to those described above. In addition, a gas inlet of a bag may be directly connected to a gas generator without using a duct serving as a gas conveying member.

In the above-described embodiments, the gas generator 14 is mounted on the seat pan 8. However, the gas generator 14 may be mounted on any other seat side member, for example, the base frame 1.

## Claims

1. An occupant restraining apparatus comprising:
a bag disposed under the front of a seat cushion and inflatable so as to press the front of the seat cushion from beneath;
a gas generator that inflates the bag in an emergency of a vehicle; and
a connecting member that connects a gas inlet of the bag to the gas generator or a gas conveying member fixed to the gas generator,
wherein a mounting member for fixing the gas generator to a seat-side member is provided in the connecting member.

2. The occupant restraining apparatus according to Claim 1, wherein the connecting member is a band that fastens the gas inlet to the gas generator or the gas conveying member, and the mounting member is a bolt protruding from the band.

3. An occupant restraining apparatus comprising:
a bag disposed under the front of a seat cushion and inflatable so as to press the front of the seat cushion from beneath;
a gas generator that inflates the bag in an emergency of a vehicle; and
a gas conveying member fixed to the gas generator and to which a gas inlet of the bag is connected,
wherein a mounting member for fixing the gas generator to a seat-side member is provided in the gas conveying member.

4. The occupant restraining apparatus according to Claim 3, wherein the mounting member is a bolt protruding from the gas conveying member.

5. The occupant restraining apparatus according to any one of Claims 1 to 4, wherein the seat-side member is a seat pan or a base frame.
